# EUROPEAN PATENT SPECIFICATION

(11) **EP 3 048 755 B1**
(45) Date of publication and mention of the grant of the patent: **19.06.2019**
(21) Application number: 15151978.2
(22) Date of filing: 21.01.2015
(51) Int. Cl.: H04L 12/14, H04L 29/06, H04L 12/24, H04M 15/00, H04W 4/24

(54) **METHOD, SYSTEM AND COMPUTER PROGRAM PRODUCT, USING A VIRTUAL DIAMETER EDGE AGENT**
VERFAHREN, SYSTEM UND COMPUTERPROGRAMMPRODUKT MIT VERWENDUNG EINES VIRTUELLEN DIAMETER-EDGE-AGENTEN
PROCÉDÉ, SYSTÈME ET PRODUIT PROGRAMME D'ORDINATEUR, UTILISANT UN DIAMETER EDGE AGENT VIRTUEL

(43) Date of publication of application: 27.07.2016
(73) Proprietor: Telia Company AB, 106 63 Stockholm (SE)
(72) Inventor: Hämäläinen, Jori, 33960 Pirkkala (FI)
(74) Representative: Papula Oy

(56) References cited:
- US-A1- 2014 040 975
- Gsm Association: "Document IR.88: LTE and EPC Roaming Guidelines (Version 10.0)", , 10 July 2013 (2013-07-10), pages 1-68, XP055125912, Retrieved from the Internet: URL:http://www.gsma.com/newsroom/wp-conten t/uploads/2013/07/IR.88-v10.0.pdf [retrieved on 2014-06-30]
- TAKAAKI MORIYA: "Survey of IPX (IP eXchange) as an Emerging International Interconnection between Telecommunication Networks", IEICE TRANSACTIONS ON COMMUNICATIONS, COMMUNICATIONS SOCIETY, TOKYO, JP, vol. E96B, no. 4, 1 April 2013 (2013-04-01), pages 927-938, XP001584260, ISSN: 0916-8516, DOI: HTTP://DX.DOI.ORG/10.1587/TRANSCOM.E96.B.9 27 [retrieved on 2013-04-01]

## Description

### BACKGROUND

The invention relates to communications. More specifically, the invention relates to routing of an IP interconnection.

IP exchange (or IPX) is a telecommunications interconnection model for the exchange of IP based traffic between customers of separate mobile and fixed operators as well as other types of service providers, via an IP based Network-to-Network Interface. The managed network environment is traffic engineered to support specific IP services at specific quality levels. The intent of IPX is to provide interoperability of IP-based services between all service provider types within a commercial framework that enables all parties in the value chain to receive a commercial return. The commercial relationships are underpinned with service level agreements which guarantee performance, quality and security.

Several operators may be connected to the IPX network in various ways. Some operators have their own DEA interface for IPX interconnection (DEA, Diameter Edge Agent), while some operators have their own specific routing specifications. Some operators act as virtual operators and purchase the IPX functionality from carrier operators. For the network operator, this results in a complex configuration and various routing models to be updated and constantly maintained.

In US 2014/040975 a Diameter Proxy (DP), a Diameter Routing Agent (DRA) or a Diameter Service Router (DSR) is used to perform routing to an OCS server. "LTE and EPC Roaming Guidelines, ver. 10.0" of the GSM Association discloses DEA implemented as Proxy Agent based hubs to support applications required to enable inter-operator roaming.

"Document IR.88: LTE and EPC Roaming Guidelines (version 10.0)", XP055125912, shows the use of Diameter Edge agents in a Diameter architecture, and in particular mentions the use of DEA implemented as Proxy Agent and of Proxy Agent based Hubs.

One example of carrier operator problems is that the carrier operator must modify the interface for invoicing frequently for a virtual operator. Current DEA systems do not support a carrier operator model that sells resources for other operators. Carrier operators have different requirements for invoicing and routing flexibility. Traditional Diameter Edge Agents are built for a full-mesh network/signaling configuration.

### SUMMARY

The invention is defined by the independent claims 1, 6 and 11. The dependent claims define various embodiments.

The first aspect discloses a method for routing an IP interconnection, comprising an IPX Provider Network Element connectable via a first Diameter Edge Agent to an Inter-Service Provider IP Backbone. According to the method, the first Diameter Edge Agent comprises the steps for assigning an identifier for a destination IPX Interconnecting operator; and routing the signaling to a virtual Diameter Edge Agent when the destination IP Interconnecting Network Element does not comprise a second Diameter Edge Agent, wherein the single identifier addresses the virtual Diameter Edge Agent.

In one embodiment of the method, the identifier comprises an IP address and a port address. In one embodiment of the method, the virtual Diameter Edge Agent is an independent server process. In one embodiment of the method, the first Diameter Edge Agent comprises information about the cost to route the signaling between predefined Network Elements and routing the signaling according to the cost and/or quality of the route. In one embodiment of the method, the virtual Diameter Edge Agent comprises configuration information for routing the signaling to the IP Interconnecting Network Element.

The second aspect discloses a system for routing an IP interconnection, comprising an IPX Provider Network Element connectable via a first Diameter Edge Agent to an Inter-Service Provider IP Backbone. The first Diameter Edge Agent comprises a means for assigning an identifier for a destination IPX Interconnecting operator; and a means for routing the signaling to a virtual Diameter Edge Agent when the destination IP Interconnecting Network Element does not comprise a second Diameter Edge Agent, wherein the single identifier addresses the virtual Diameter Edge Agent. An example of the means for assigning is a routing table that may be connectable to an interface for entering data, such as a user interface. The means for routing is for example a computer implemented switch and/or computer implemented routing message comprising data of the connection to be routed, the source address, the next address or the destination address.

In one embodiment, the identifier comprises an IP address and a port address. In one embodiment, the virtual Diameter Edge Agent is an independent server process. In one embodiment, the first Diameter Edge Agent comprises a means for storing information about the cost to route the signaling between predefined Network Elements and a means for routing the signaling according to the cost and/or quality of the route. The means for storing information is for example a computer memory, a database or a configuration table stored in the computer memory. In one embodiment, the virtual Diameter Edge Agent comprises a means for storing configuration information for routing the signaling to the IP Interconnecting Network Element.

The third aspect of the invention discloses a computer program product for routing an IP interconnection by an IPX Provider Network Element connectable via a first Diameter Edge Agent to an Inter-Service Provider IP Backbone, the Diameter Edge Agent comprising a computer-readable medium bearing computer program code embodied therein for use with a computer, the computer program code comprising code for assigning an identifier for a destination IPX Interconnecting operator; and routing the signaling to a virtual Diameter Edge Agent when the destination IP Interconnecting Network Element does not comprise a second Diameter Edge Agent, wherein the single identifier addresses the virtual Diameter Edge Agent.

In one embodiment, the identifier comprises an IP address and a port address. In one embodiment, the virtual Diameter Edge Agent is an independent server process. In one embodiment, the first Diameter Edge Agent comprises information about the cost to route the signaling between predefined Network Elements and code for routing the signaling according to the cost and/or quality of the route. In one embodiment, the virtual Diameter Edge Agent comprises configuration information for routing the signaling to the IP Interconnecting Network Element.

The embodiments of the invention described hereinbefore may be used in any combination with each other. Several of the embodiments may be combined together to form a further embodiment of the invention. A method, an apparatus, a computer program or a computer program product to which the invention is related may comprise at least one of the embodiments of the invention described hereinbefore. It is to be understood that any of the above embodiments or modifications can be applied singly or in combination to the respective aspects to which they refer, unless they are explicitly stated as excluding alternatives.

The present solution enables a carrier operator to use LTE roaming with cascade hubbing. Cascade hubbing comprises routing signaling via other carrier operators and invoicing the traffic by a selected traffic path. Further, the present solution enables a hub or a star approach for the routing configuration.

Many of the attendant features will be more readily appreciated as they become better understood by reference to the following detailed description considered in connection with the accompanying drawings.

### BRIEF DESCRIPTION OF THE DRAWINGS

The present description will be better understood from the following detailed description read in light of the accompanying drawings, wherein::
**Fig. 1** is an example of a block diagram illustrating the elements of the system,
**Fig. 2** is an example of an IPX hub DEA relation to multiple customers and virtual DEAs,
**Fig. 3** is a flowchart illustrating an example of the message handling; and
**Fig. 4** is a flowchart illustrating an example of Diameter message checking in a cascaded manner.

### DETAILED DESCRIPTION

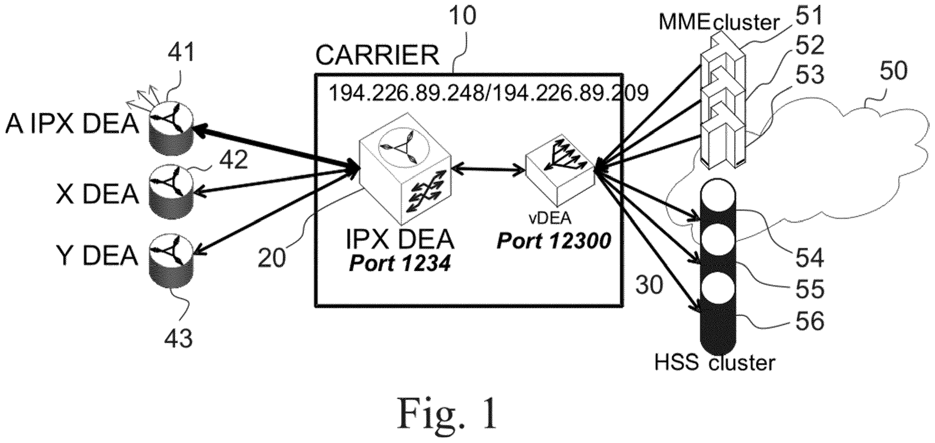

The detailed description provided below in connection with the appended drawings is intended as a description of the present examples and is not intended to represent the only forms in which the present examples may be constructed or utilized. However, the same or equivalent functions and sequences may be accomplished by different examples. Figure 1 illustrates a generic architecture model of an exemplary embodiment. The network element 10 of the carrier operator comprises a communication interface for interconnecting to another operator's network elements. The network element 10 may comprise one or more servers or a server cluster, running software configured to transmit or receive data. The network element 10 may comprise a configuration for providing interconnection services such as voice, roaming, signaling, messaging or video. One typical service is roaming for IP data between operators and support for LTE services. The IP connection between operators conforms to IPX specifications and is carried out by connections separate from the open Internet.

The network element 10 comprises a Diameter Edge Agent DEA 20. 3GPP standards TS 23.401 and TS 23.402 define a direct Diameter interface between the network elements and the Diameter Base Protocol, IETF RFC 3588, defines the function of Diameter Agents. The Diameter Extended NAPTR, IETF RFC 6408, defines enhancements to the Diameter Routing mechanisms. The DEA is considered as the point of contact into and out of an operator's network at the Diameter application level. In this example the Diameter Edge Agent 20 is connected to three other Diameter Edge Agents hosted by other operators: A IPX DEA 41, X DEA 42 and Y DEA 43.

The network element 10 also comprises a virtual Diameter Edge Agent 30. The virtual Diameter Edge Agent 30 may be implemented on the same server as the Diameter Edge Agent 20 or it may be connected via a communication link to the Diameter Edge Agent 20. The virtual DEA 30 is assigned to an entity such as an operator 50, wherein the traffic to the operator 50 is addressed from the Diameter Edge Agent 20 to a specific IP address and port address. In this example the virtual DEA is addressed to port 38600. The configuration specific to the operator 50 is configured to the virtual DEA 30, in this example the connections to the Mobile Management Entity MME cluster 51, 52, 53 or connections to the Home Subscriber Server HSS cluster 54, 55, 56. The virtual Diameter Edge Agent provides a production environment of a commercial Diameter Edge Agent with the carrier perspective and carrier services. The virtual Diameter Edge Agent 30 may be seen as an outsourced DEA for a Mobile Network Operator by utilizing carrier operator facilities. According to an embodiment, the Diameter Edge Agent 20 is configured to handle routing and/or billing between realms in a manner comparable to an Internet domain. According to an embodiment, the virtual DEA is configured for routing between hosts or clusters of hosts in a manner comparable to an IP router when the domain indicates the IP delivery address.

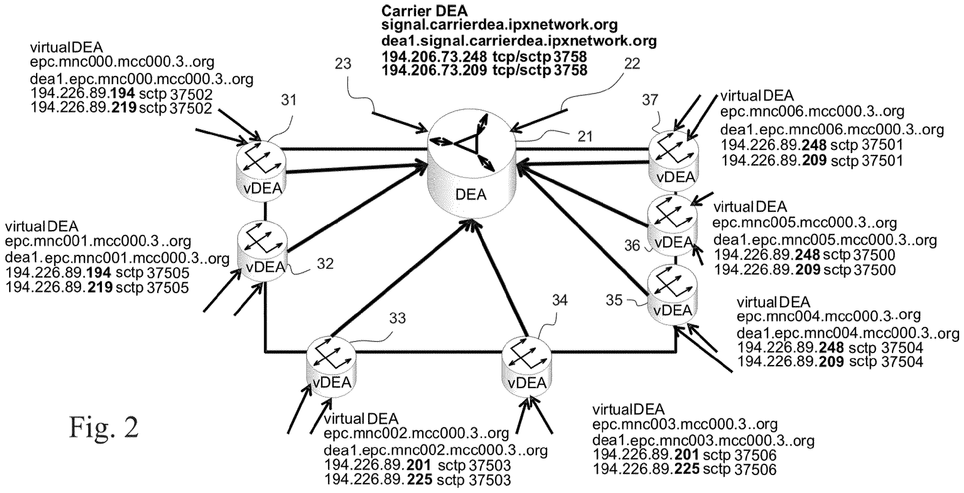

Figure 2 illustrates an exemplary scenario, wherein the IPX hub Diameter Edge Agent 21 has multiple customers and virtual Diameter Edge Agents 31 - 37. The Diameter Edge Agent 21 receives routing 22, 23 from other operators via the IPX connection, particularly such operators that have their own Diameter Edge Agent. In this example, virtual Diameter Edge Agents 31 - 37 are purposed for the operators that do not have the Diameter Edge Agent. Virtual Diameter Edge Agents 31 - 37 are configured for those operators that connect to the IPX without their own Diameter Edge Agent. For example a first mobile virtual network operator is connected to the first virtual Diameter Edge Agent 31. The Diameter Edge Agent 21 and all virtual Diameter Edge Agents have a unique address. In this example the virtual Diameter Edge Agents 31 - 37 are addressed with different IP addresses and URLs and customer-specific ports. Virtual Diameter Agents 31 - 37 are implemented in the same computer environment such as a server cluster as the Diameter Edge Agent 21, all residing in the operator premises. Other server configurations are possible, for example a cloud computing environment.

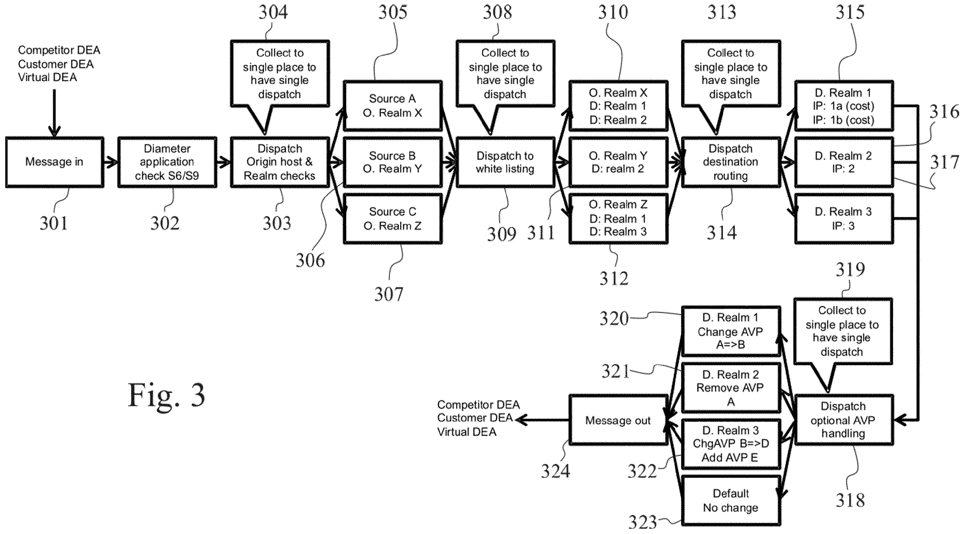

Figure 3 is a schematic flowchart illustration of the steps for routing the interconnection, white listing the allowed parties, collecting information to a single point and dispatching the collected information. In step 301 the Diameter Edge Agent receives a message that is either from a Competitor DEA, a Customer DEA or a virtual DEA. The Diameter application executes a check S6/S9, step 302. In step 303 the originating host and realm checks are executed and dispatched, wherein information is collected to a single place to have a single dispatch from step 304. Sources and realms are listed in steps 305, 306, 307. Steps 308 and 309 collect information to a single place for a single dispatch for white listing the destination realms in steps 310, 311 and 312. Steps 313 and 314 collect the information in a single place for destination routing, which is dispatched to steps 315, 316 and 317. Steps 318 and 319 collect the information in a single place for optional AVP handling, which is dispatched to steps 320, 321, 322, and 323. The message is output in step 324 with the routing information either to the competitor DEA, the customer DEA or the virtual DEA. All errors in these steps lead to a failed process and the message being discarded.

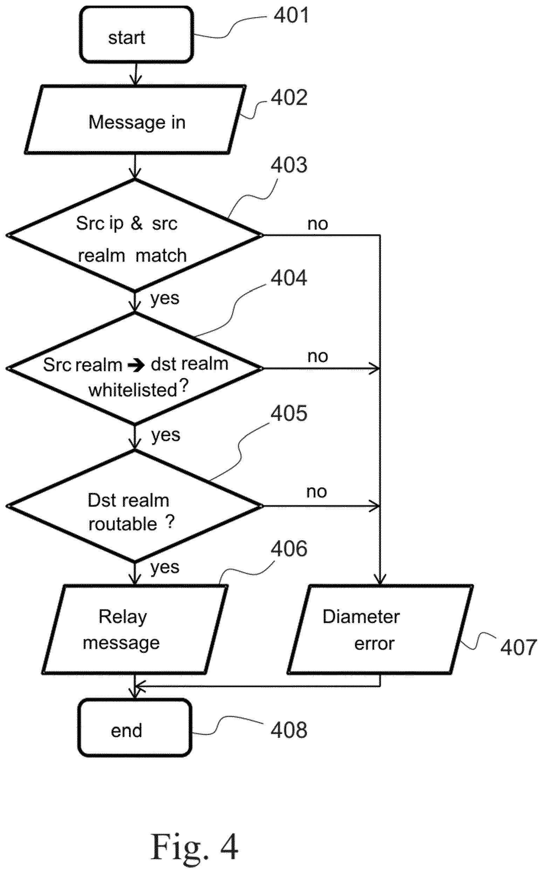

Figure 4 illustrates the process of checking the Diameter message. The process starts in step 401, and the Diameter message is received in step 402. In step 403, it is detected from the database whether the source IP address and the source realm information match. All negative responses in these steps lead to step 407, a Diameter error and ending the process in step 408. The whitelist check is executed in step 404 to check whether the source realm and the destination realm are whitelisted. In step 405, it is checked whether the destination realm is routable, and if yes, the Diameter message is relayed in step 406 and the process is ended.

The present solution creates a new service as well as a new workflow model or template in carrier operations. Examples of benefits include establishing carrier hub-based multilateral routing instead of full-mesh bilateral or carrier hub-based invoicing instead of full-mesh. It also establishes outsourced carrier services for the customer via a customer specific virtual DEA. The present solution further enables improved production management of the service, and it is easier to in-source and outsource within the service. The customer allocated virtual DEA is isolated from the main DEA, thereby improving the security and the management. Routing tables can be used to build bilateral roaming and also to enforce policies that may be customer specific. The solution enables an allowed routing path and least cost routing. The address-value pair, AVP, is processed multilaterally, comprising a common AVP manipulation dispatch. According to an embodiment, AVP manipulation is executed in every stage.

Embodiments of the present invention may be implemented in software, hardware, application logic or a combination of software, hardware and application logic. In an example embodiment, the application logic, software or instruction set is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer. A computer-readable medium may comprise a computer-readable storage medium that may be any media or means that can contain or store the instructions for use by or in connection with an instruction execution system, apparatus, or device, such as a computer. The exemplary embodiments can store information relating to various processes described herein. This information can be stored in one or more memories, such as a hard disk, optical disk, magneto-optical disk, RAM, and the like. One or more databases can store the information used to implement the exemplary embodiments of the present inventions. The databases can be organized using data structures (e.g., records, tables, arrays, fields, graphs, trees, lists, and the like) included in one or more memories or storage devices listed herein. The processes described with respect to the exemplary embodiments can include appropriate data structures for storing data collected and/or generated by the processes of the devices and subsystems of the exemplary embodiments in one or more databases.

All or a portion of the exemplary embodiments can be conveniently implemented using one or more general purpose processors, microprocessors, digital signal processors, micro-controllers, and the like, programmed according to the teachings of the exemplary embodiments of the present inventions, as will be appreciated by those skilled in the computer and/or software art(s). Appropriate software can be readily prepared by programmers of ordinary skill based on the teachings of the exemplary embodiments, as will be appreciated by those skilled in the software art. In addition, the exemplary embodiments can be implemented by the preparation of application-specific integrated circuits or by interconnecting an appropriate network of conventional component circuits, as will be appreciated by those skilled in the electrical art(s). Thus, the exemplary embodiments are not limited to any specific combination of hardware and/or software.

If desired, the different functions discussed herein may be performed in a different order and/or concurrently with each other.

Furthermore, if desired, one or more of the above-described functions may be optional or may be combined. Although various aspects of the invention are set out in the independent claims, other aspects of the invention comprise other combinations of features from the described embodiments and/or the dependent claims with the features of the independent claims, and not solely the combinations explicitly set out in the claims.

It is obvious to a person skilled in the art that with the advancement of technology, the basic idea of the invention may be implemented in various ways. The invention and its embodiments are thus not limited to the examples described above; instead they may vary within the scope of the claims.

## Claims

1. A method for routing an IP interconnection, wherein an IPX Provider Network Element (10) comprising a first Diameter Edge Agent (20) and a virtual Diameter Edge Agent (30) is connectable via said first Diameter Edge Agent (20) to an Inter-Service Provider IP Backbone, wherein the method comprises the first Diameter Edge Agent (20):
assigning an identifier for a destination IPX Interconnecting operator (50) using a routing table; and
routing the signaling to the virtual Diameter Edge Agent, wherein the virtual Diameter Edge Agent (30) is configured for an operator that does not have a Diameter Edge Agent and wherein the identifier addresses the virtual Diameter Edge Agent (30).

2. The method according to claim 1, wherein the identifier comprises an IP address and a port address.

3. The method according to claim 1 or 2, wherein the virtual Diameter Edge Agent (30) is an independent server process.

4. The method according to any of the claims 1 to 3, wherein the first Diameter Edge Agent (20) comprises information about the cost to route the signaling between predefined Network Elements and the method comprises routing the signaling according to the cost and/or quality of the route.

5. The method according to any of the claims 1 to 4, wherein the virtual Diameter Edge Agent (30) comprises configuration information for routing the signaling to the IP Interconnecting Network Element.

6. A system for routing an IP interconnection, the system comprising an IPX Provider Network Element (10) which comprises a first Diameter Edge Agent (20) and is connectable via said first Diameter Edge Agent to an Inter-Service Provider IP Backbone, **characterized in that** the first Diameter Edge Agent (20) comprises:
a routing table for assigning an identifier for a destination IPX Interconnecting operator (50); and
a means for routing the signaling to a virtual Diameter Edge Agent (30), wherein the virtual Diameter Edge Agent (30) is configured for an operator that does not have a Diameter Edge Agent and wherein the identifier addresses the virtual Diameter Edge Agent (30).

7. The system according to claim 6, wherein the identifier comprises an IP address and a port address.

8. The system according to claim 6 or 7, wherein the virtual Diameter Edge Agent (30) is an independent server process.

9. The system according to any of the claims 6 to 8, wherein the first Diameter Edge Agent (20) comprising a means for storing information about the cost to route the signaling between predefined Network Elements and a means for routing the signaling according to the cost and/or quality of the route.

10. The system according to any of the claims 6 to 9, wherein the virtual Diameter Edge Agent (30) comprises a means for storing configuration information for routing the signaling to the IP Interconnecting Network Element.

11. A computer program product adapted to, when executed by a computer, perform the following steps, said computer forming part of a network element comprising a first Diameter Edge agent (20) and a virtual Diameter Edge Agent (30):
assigning an identifier, using a routing table, for a destination IPX Interconnecting operator (50) for which the virtual Diameter Edge Agent (30) is configured; and
routing the signaling to the virtual Diameter Edge Agent (30), wherein the identifier addresses the virtual Diameter Edge Agent (30).

12. The computer program product according to claim 11, wherein the identifier comprises an IP address and a port address.

13. The computer program product according to claim 11 or 12, wherein the virtual Diameter Edge Agent (30) is an independent server process.

14. The computer program product according to any of the claims 11 to 13, wherein the first Diameter Edge Agent (20) comprises information about the cost to route the signaling between predefined Network Elements and code for routing the signaling according to the cost and/or quality of the route.

15. The computer program product according to any of the claims 11 to 14, wherein the virtual Diameter Edge Agent (30) comprises configuration information for routing the signaling to the IP Interconnecting Network Element.

## Patentansprüche

1. Verfahren zum Routen einer IP-Verbindung, wobei ein IPX-Anbieter-Netzwerkelement (10), das einen ersten Diameter-Edge-Agenten (20) und einen virtuellen Diameter-Edge-Agenten (30) umfasst, über den ersten Diameter-Edge-Agenten (20) an einen Diensteanbieter-übergreifenden IP-Backbone anschließbar ist, wobei das Verfahren umfasst, dass der erste Diameter-Edge-Agent (20):
eine Kennung für einen Ziel-IPX-Verbindungs-Betreiber (50) mithilfe einer Routing-Tabelle zuweist und
die Signalisierung zu dem virtuellen Diameter-Edge-Agenten routet, wobei der virtuelle Diameter-Edge-Agent 30 für einen Betreiber konfiguriert ist, der keinen Diameter-Edge-Agenten hat, und wobei die Kennung den virtuellen Diameter-Edge-Agent (30) adressiert.

2. Verfahren gemäß Anspruch 1, wobei die Kennung eine IP-Adresse und eine Port-Adresse umfasst.

3. Verfahren gemäß Anspruch 1 oder 2, wobei der virtuelle Diameter-Edge-Agent (30) ein unabhängiger Server-Prozess ist.

4. Verfahren gemäß einem der Ansprüche 1 bis 3, wobei der erste Diameter-Edge-Agent (20) Informationen über die Kosten zum Routen der Signalisierung zwischen vordefinierten Netzwerkelementen umfasst und das Verfahren ein Routen der Signalisierung entsprechend den Kosten und/oder der Qualität der Route umfasst.

5. Verfahren gemäß einem der Ansprüche 1 bis 4, wobei der virtuelle Diameter-Edge-Agent (30) Konfigurationsinformationen zum Routen der Signalisierung zu dem IP-Verbindungs-Netzwerkelement umfasst.

6. System zum Routen einer IP-Verbindung, wobei das System ein IPX-Anbieter-Netzwerkelement (10) umfasst, das einen ersten Diameter-Edge-Agenten (20) umfasst und über den ersten Diameter-Edge-Agenten an einen Diensteanbieter-übergreifenden IP-Backbone anschließbar ist, **dadurch gekennzeichnet, dass** der erste Diameter-Edge-Agent (20) umfasst:
eine Routing-Tabelle zum Zuweisen einer Kennung für einen Ziel-IPX-Verbindungs-Betreiber (50) und
ein Mittel zum Routen der Signalisierung zu einem virtuellen Diameter-Edge-Agenten (30), wobei der virtuelle Diameter-Edge-Agent (30) für einen Betreiber konfiguriert ist, der keinen Diameter-Edge-Agenten hat, und wobei die Kennung den virtuellen Diameter-Edge-Agenten (30) adressiert.

7. System gemäß Anspruch 6, wobei die Kennung eine IP-Adresse und eine Port-Adresse umfasst.

8. System gemäß Anspruch 6 oder 7, wobei der virtuelle Diameter-Edge-Agent (30) ein unabhängiger Server-Prozess ist.

9. System gemäß einem der Ansprüche 6 bis 8, wobei der erste Diameter-Edge-Agent (20) ein Mittel zum Speichern von Informationen über die Kosten zum Routen der Signalisierung zwischen vordefinierten Netzwerkelementen und ein Mittel zum Routen der Signalisierung entsprechend den Kosten und/oder der Qualität der Route umfasst.

10. System gemäß einem der Ansprüche 6 bis 9, wobei der virtuelle Diameter-Edge-Agent (30) ein Mittel zum Speichern von Konfigurationsinformationen zum Routen der Signalisierung zu dem IP-Verbindungs-Netzwerkelement umfasst.

11. Computerprogrammprodukt, das dazu eingerichtet ist, bei Ausführung durch einen Computer die folgenden Schritte durchzuführen, wobei der Computer einen Teil eines Netzwerkelements bildet, das einen ersten Diameter-Edge-Agenten (20) und einen virtuellen Diameter-Edge-Agenten (30) umfasst:
Zuweisen einer Kennung für einen Ziel-IPX-Verbindungs-Betreiber (50), für den der virtuelle Diameter-Edge-Agent (30) konfiguriert ist, mithilfe einer Routing-Tabelle und
Routen der Signalisierung zu dem virtuellen Diameter-Edge-Agenten (30), wobei die Kennung den virtuellen Diameter-Edge-Agenten (30) adressiert.

12. Computerprogrammprodukt gemäß Anspruch 11, wobei die Kennung eine IP-Adresse und eine Port-Adresse umfasst.

13. Computerprogrammprodukt gemäß Anspruch 11 oder 12, wobei der virtuelle Diameter-Edge-Agent (30) ein unabhängiger Server-Prozess ist.

14. Computerprogrammprodukt gemäß einem der Ansprüche 11 bis 13, wobei der erste Diameter-Edge-Agent (20) Informationen über die Kosten zum Routen der Signalisierung zwischen vordefinierten Netzwerkelementen und Code zum Routen der Signalisierung entsprechend den Kosten und/oder der Qualität der Route umfasst.

15. Computerprogrammprodukt gemäß einem der Ansprüche 11 bis 14, wobei der virtuelle Diameter-Edge-Agent (30) Konfigurationsinformationen zum Routen der Signalisierung zu dem IP-Verbindungs-Netzwerkelement umfasst.

## Revendications

1. Procédé de routage d'une interconnexion IP, dans lequel un élément de réseau de fournisseurs IPX (10) comprenant un premier agent de périphérie Diameter (20) et un agent de périphérie Diameter virtuel (30) peut être connecté via ledit premier agent de périphérie Diameter (20) à un réseau fédérateur IP entre fournisseurs de services, dans lequel le procédé comprend, par le premier agent de périphérie Diameter (20) :
l'attribution d'un identifiant à un opérateur d'interconnexion IPX de destination (50) à l'aide d'une table de routage ; et
le routage de la signalisation vers l'agent de périphérie Diameter virtuel, dans lequel l'agent de périphérie Diameter virtuel (30) est configuré pour un opérateur qui n'a pas d'agent de périphérie Diameter et dans lequel l'identifiant adresse l'agent de périphérie Diameter virtuel (30).

2. Procédé selon la revendication 1, dans lequel l'identifiant comprend une adresse IP et une adresse de port.

3. Procédé selon la revendication 1 ou 2, dans lequel l'agent de périphérie Diameter virtuel (30) est un processus de serveur indépendant.

4. Procédé selon l'une quelconque des revendications 1 à 3, dans lequel le premier agent de périphérie Diameter (20) comprend des informations concernant le coût de routage de la signalisation entre des éléments de réseau prédéfinis et le procédé comprend le routage de la signalisation selon le coût et/ou la qualité de la route.

5. Procédé selon l'une quelconque des revendications 1 à 4, dans lequel l'agent de périphérie Diameter virtuel (30) comprend des informations de configuration pour router la signalisation vers l'élément de réseau d'interconnexion IP.

6. Système de routage d'une interconnexion IP, le système comprenant un élément de réseau de fournisseurs IPX (10) qui comprend un premier agent de périphérie Diameter (20) et peut être connecté via ledit premier agent de périphérie Diameter à un réseau fédérateur IP entre fournisseurs de services, **caractérisé en ce que** le premier agent de périphérie Diameter (20) comprend :
une table de routage pour attribuer un identifiant à un opérateur d'interconnexion IPX de destination (50) ; et
un moyen de routage de la signalisation vers un agent de périphérie Diameter virtuel (30), dans lequel l'agent de périphérie Diameter virtuel (30) est configuré pour un opérateur qui n'a pas d'agent de périphérie Diameter et dans lequel l'identifiant adresse l'agent de périphérie Diameter virtuel (30).

7. Système selon la revendication 6, dans lequel l'identifiant comprend une adresse IP et une adresse de port.

8. Système selon la revendication 6 ou 7, dans lequel l'agent de périphérie Diameter virtuel (30) est un processus de serveur indépendant.

9. Système selon l'une quelconque des revendications 6 à 8, dans lequel le premier agent de périphérie Diameter (20) comprend un moyen de stockage d'informations concernant le coût de routage de la signalisation entre des éléments de réseau prédéfinis et un moyen de routage de la signalisation selon le coût et/ou la qualité de la route.

10. Système selon l'une quelconque des revendications 6 à 9, dans lequel l'agent de périphérie Diameter virtuel (30) comprend un moyen de stockage d'informations de configuration pour router la signalisation vers l'élément de réseau d'interconnexion IP.

11. Produit-programme d'ordinateur adapté pour, lorsqu'il est exécuté par un ordinateur, réaliser l'étape suivante, ledit ordinateur faisant partie d'un élément de réseau comprenant, par un premier agent de périphérie Diameter (20) et un agent de périphérie Diameter virtuel (30) :
l'attribution d'un identifiant, à l'aide d'une table de routage, à un opérateur d'interconnexion IPX de destination (50) pour lequel l'agent de périphérie Diameter virtuel (30) est configuré ; et
le routage de la signalisation vers l'agent de périphérie Diameter virtuel (30), dans lequel l'identifiant adresse l'agent de périphérie Diameter virtuel (30).

12. Produit-programme d'ordinateur selon la revendication 11, dans lequel l'identifiant comprend une adresse IP et une adresse de port.

13. Produit-programme d'ordinateur selon la revendication 11 ou 12, dans lequel l'agent de périphérie Diameter virtuel (30) est un processus de serveur indépendant.

14. Produit-programme d'ordinateur selon l'une quelconque des revendications 11 à 13, dans lequel le premier agent de périphérie Diameter (20) comprend des informations concernant le coût de routage de la signalisation entre des éléments de réseau prédéfinis et un code de routage de la signalisation selon le coût et/ou la qualité de la route.

15. Produit-programme d'ordinateur selon l'une quelconque des revendications 11 à 14, dans lequel l'agent de périphérie Diameter virtuel (30) comprend des informations de configuration pour router la signalisation vers l'élément de réseau d'interconnexion IP.
